# EUROPEAN PATENT APPLICATION

(11) **EP 1 296 275 A2**
(43) Date of publication of application: **26.03.2003**
(21) Application number: 02394085.1
(22) Date of filing: 15.08.2002
(51) Int. Cl.: G06F 17/60

(54) **A system and method for the analysis of email traffic**

(30) Priority: 15.08.2001 IE 20010766
(71) Applicant: Mail Morph Limited, County Waterford (IE)
(72) Inventor: Nolan, Brendan Paul, County Waterford (IE); Kennedy, Lorcan Finbar, County Waterford (IE)
(74) Representative: Schütte, Gearoid

(57) **Abstract**

A system and method for the analysis of email traffic in a computer network comprising a mail server computer (2) and a plurality of remote employee computers (3) connected to the mail server computer. Email communications are sent and received at each of the employee computers via the mail server computer. The header information and any available attachment information of each email communication are copied and analysis on the header and attachment information is carried out. Reports based on the analysis of the header and attachment information are generated for review by a system administrator. Any unauthorised communications are brought to the attention of the system administrator. Reports on the usage of email by the organisation's entire workforce may be generated. In this way an analysis of email communication may be carried out without reviewing the actual content of each individual email.

## Description

### Introduction

The present invention relates to a method and system of analysing email traffic to and from and within a group of users.

Generally, the invention is directed towards commercial and other organisations, which almost certainly have more than one department or groups of people who will correspond with each other by email. Further, the organisation will obviously correspond with other external organisations and individuals, also by email. All organisations have their own customers and their own suppliers. Thus, one would expect that a considerable amount of the external email from an organisation should be directed either towards customers or to suppliers. Similarly, within an organisation, one would expect certain departments to have regular inter-company or inter-organisation traffic, while other departments would not necessarily interact very closely.

Quality control and the production departments are obviously likely to be in constant communication as well, for example, quality control and marketing but one would not expect that the accounts or financial divisions of the company would have a considerable volume of traffic with the quality control department. Similarly, one would not expect one individual within the quality control department to have a necessity to have a continual, continuous and repeating correspondence by email with one individual dealing with credit control.

The use of email leads to considerable concerns for companies and organisations on both a productivity and usage viewpoint but also from a company policy viewpoint. For example, if there is an inordinate usage of email by certain individuals, then obviously this email usage may be taking up a considerable amount of bandwidth and thus causing usage and capacity problems. Similarly, one could query whether a person is carrying out his or her tasks sufficiently if they are spending, for example, 30% of their time online sending and receiving emails. Also, the sheer volume of necessary correspondence could highlight an organisational problem.

There are also serious concerns in many organisations now in relation to the nature of the sites that various employees receive and process email from during their working day while employed and paid by the company to work. There is also serious concerns about the external organisations that people may be contacting, not just simply, as is the more popular conception of pornographic sites and the like, which may, in addition to being time wasting, cause difficulties within an organisation if the matter downloaded by an employee is subsequently transmitted to other employees within the organisation, or indeed, to individuals external to the organisation. However, a major concern must be inappropriate contacts between staff and other persons external of the organisation. The contacting, by persons not authorised to do so, of financial journalists prior to announcement of an earnings result for instance, would not be deemed an appropriate matter.

A further problem with most methods and systems of analysing email at present is that they effectively read the emails which can be questionable, firstly, from a matter or privacy law and secondly, purely from a productivity and computational viewpoint. It is very difficult, time consuming and expensive to use any of the systems at present available for the monitoring of emails. Thus, irrespective of the legal problems in relation to the privacy of the people sending and receiving their emails, these systems are generally unattractive for organisations. One of the other difficulties found in many of these systems is that because they read the emails with a view to identifying patterns in text, or particular items or events, as defined in a rule or filter database, they cannot be fully accurate, and thus their effectiveness is limited. It is thus desirable to have a manner of evaluating the traffic and content of emails without having to read each mail.

All of the above comments are more a reference to the actual inappropriateness of the emails, however, there are other matters of considerable concern to organisations that could be attended to if email traffic could be analysed in a meaningful way to allow the company change its organisational methods. For example, if it was noticeable that one particular individual was receiving a large number of emails from two or three other individuals within an organisation, then it would be advantageous to analyse the nature of such contacts, particularly if such contacts have a serious, meaningful and business oriented purpose. It would be easy for a manager, knowing that four individuals were in constant contact, to query the four individuals as to why they were, since one would presume that they were in contact for some reason and therefore the manager should be able to analyse the causes of such contact and the problems and situations that arose to cause these contacts. Simple reorganisation could lead to increased efficiencies, an analogy being somewhat similar to the old-fashioned and now largely ignored, work study with its time and motion studies of communication patterns between individuals within organisations. It would be particularly useful for organisational studies.

Further, a large volume of emails could highlight serious problems that were arising in the organisation, which problems were not necessarily being reported in a meaningful way to management. Continual emails from the costing departments to certain cost centres of the organisation would highlight the fact that there was some problem between these two departments in the organisation, which problem would be highlighted and hopefully could be resolved quickly. Thus, in addition to a need to analyse wasteful and inappropriate email usage, there is a need to analyse what are appropriate necessary emails in the circumstances pertaining and to highlight problems within the organisation which require solutions.

It would appear to be perfectly reasonable for companies to request employees to show them the contents of an email when the addressee of the email can be demonstrated to be an inappropriate addressee. The great advantage for an organisation is that they will be able to avoid looking at what are essentially private emails between two individuals since they will not necessarily need to know the content of such emails if they are inappropriate within the company's policy. It is one matter to forbid employees to engage in private correspondence during working hours and to install a system to monitor the incidence of such correspondence. It is an entirely different matter to read the private correspondence of employees. For example, if a company suggests that it is inappropriate to send emails to private individuals who are not engaged in the business during office hours, then simply identifying that these individuals are indeed not engaged in the business of the company or organisation, may be sufficient and thus the nature of the email may not be important. Thus, the nature of an email between a man and his wife or girlfriend are irrelevant to the organisation. As far as the organisation is concerned, more than a certain amount of this traffic may be inappropriate. Most organisations do not have any problem whatsoever with somebody using the email for personal traffic in a reasonable manner. Further, certain sites may cause companies concern, whether they be pornographic sites, bookmakers, and so on. Part of the problem with emails generally is attachments. Unfortunately, the attachments have the ability to deliver and receive a significant number of, what can be best described, as corporate threats. This in particular relates to the distribution within an organisation of attachments from inappropriate sites and also possibly the sending of attachments out of the organisation.

Furthermore, attachments that may appear harmless may be used to disguise other more harmful threats to the organisation. A simple text document may have a jpeg image embedded therein that would not normally be found unless the actual attachment was opened up and viewed by a system administrator. Again, this introduces privacy issues as well as being time consuming to carry out.

Accordingly, the present invention is directed towards providing a system and method for reporting on usage patterns of emails within a real time work environment. The purpose of the invention is to establish communication pathways both internally within an organisation and externally. Further, ideally this should be achieved without breaching the initial privacy of an individual.

### Statements of Invention

According to the invention, there is provided a method of non-intrusive analysis of email communications in an organisation's computer network, the organisation's computer network comprising a mail server computer, a plurality of remote employee computers operable by an organisation employee, and network memory having user profiles relating to each organisation employee stored thereon, a telecommunications network connecting the mail server and the remote employee computers, the method comprising the steps of:
(a) intercepting email communications in the organisation's computer network;
(b) copying header information and any attachment information of each intercepted email communication;
(c) allowing the email communication to proceed to its desired destination;
(d) storing the header information and the attachment information where available in network memory;
(e) retrieving at least one user profile relevant to the intercepted email communication from network memory;
(f) analysing the intercepted email communications header and any available attachment information in accordance with the user profile; and
(g) generating a report based on the analysis of the intercepted email communications header and available attachment information.

This is seen as a particularly efficient method of analysing email communications in an organisation's computer network as analysis is carried out on header information and any available attachment information. The body of the email does not have to be read for the analysis to be carried out, therefore there is a computationally efficient method of analysis. Furthermore, this passive method of analysis may be installed with the minimum of difficulty to existing legacy systems with little IT support required. The analysis and reporting can be as detailed as necessary and may be carried out as often as necessary in the computer network.

In another embodiment of the invention there is provided a method of non-intrusive analysis of email communications in an organisation's computer network in which the step of copying header information further comprises copying one or more of a sender address, receiver address, time sent details and subject details where available from the header information. By having these details a more complete analysis may be carried out and it may be determined whether the email communication is an internal communication or a communication involving a person external the company. Furthermore, the subject details will allow the analysis to determine whether this email is part of a string of emails in a communication chain or conversation.

In one embodiment of the invention there is provided a method of non-intrusive analysis of email communications in an organisation's computer network in which the initial step is performed of considering the position of an employee within the organisation as well as the department in which the employee is working before allocating a user profile to each organisation employee, the user profile detailing acceptable email communications including one or more of:
(a) predetermined acceptable incoming traffic volume levels;
(b) predetermined acceptable outgoing traffic volume levels;
(c) predetermined acceptable incoming content types;
(d) predetermined acceptable outgoing content types;
(e) predetermined acceptable incoming communication addresses; and
(f) predetermined acceptable outgoing communication addresses.

By allocating a user profile to each organisation employee, acceptable communications that are carried out in the course of a normal working day should not cause any alarm unless certain levels are exceeded. The analysis will be more specific in that only potential problems will be highlighted. This will also allow the system administrators to have individual profiles for each user as certain departments, such as an engineering draftsman's department, may have need for sending large jpeg images, whereas other departments, such as accounts, would not. The user profiles can be tailored to suit the individual's needs. Furthermore, certain communication address such as those supplied by Hotmail (registered Trade Mark) and Yahoo! (registered Trade Mark) can be tagged as inappropriate communication addresses as they would normally indicate personal communications. This would enable the method to identify personal communications from work related communications in a simple manner.

In a further embodiment of the invention there is provided a method in which a number of organisation employees are grouped together into a user group and analysis and reporting of the user group email communications are carried out. By having user groups and analysis of individual departments or groups of employees may be carried out which may be useful in determining which departments converse with the departments most frequently as well as being able to ascertain details of the organisation as a whole and the email usage of that organisation.

In another embodiment of the invention there is provided a method in which there are a plurality of distributed mail server computers in an organisation's computer network, each mail server computer having a plurality of remote employee computers connected thereto by way of a telecommunications network, the method further comprising the step of designating one of the mail servers as the master mail server and the remainder of the mail servers as slave mail servers, each of the slave mail servers sending generated reports to the master mail server and thereafter the master mail server generating an organisation computer network email communication report. In this way the analysis and reporting of the organisation's usage of email communication can be determined from a central location. Previously, only information regarding a particular installation would be available whereas using this method, details regarding the entire company's use of email can be ascertained. The reports sent by each of the slave mail servers to the master mail servers may be compressed and encrypted before being transmitted to the master mail server. This will help to provide a secure and bandwidth efficient method.

In one embodiment of the invention there is provided a method in which the step of generating a report based on the analysis of the email communication further comprises:
(a) defining alarm conditions based on variants of traffic having regard to the user profile; and
(b) on generating a report, generating an alert to a system administrator that predetermined alarm conditions have been met.

By generating an alert the system administrator's attention will be drawn to a particular alarm condition which may require his or her attention.

In a further embodiment of the invention there is provided a method in which an alert is generated on the volume of email traffic being above a certain level. By generating an alert when the volume of email traffic is above a certain level the system administrator can determine when two employees are in constant contact and if this contact is work related whether new systems can be put in place to further facilitate the interaction between these two parties. It may also be used to determine whether inappropriate communications of a personal nature are being carried out by a particular employee.

In another embodiment of the invention there is provided a method in which an alert is generated on the volume of email traffic being below a predetermined level. This would be a useful way of observing the metrics or employee interaction of a company. Human resources staff will be able to determine whether there are good and effective lines of communication operating throughout the company or whether potential problems exist in certain areas of the organisation.

In one embodiment of the invention an alert is generated on the email communication being addressed with an unauthorised address. This will draw the attention of the system administrator to a situation in which company email is being used for personal purposes or is being used for inappropriate communication between an employee and a third party. This will also help to recognise unexpected lines of communication within a company and will enable management to facilitate necessary contacts between certain employees. It is envisaged that specific and unauthorised addresses may be nominated.

In another embodiment of the invention there is provided a method in which each attachment is checked for compression and on the attachment not being compressed the steps are performed of:
(a) measuring the size of the uncompressed attachment;
(b) on the attachment size exceeding a predetermined level, compressing the attachment and measuring the size of the compressed attachment; and
(c) generating a report for the system administrator.

This will allow for monitoring of the bandwidth usage by both employees and user groups. Better management of the available bandwidth can then be possible.

In a further embodiment of the invention there is provided a method in which each attachment is checked for compression and on the attachment being a compressed attachment the steps are performed of:
(a) measuring the size of the compressed attachment;
(b) decompressing the attachment and measuring the size of the decompressed attachment; and
(c) calculating the percentage compression of the attachment by dividing the size of the attachment in its compressed state by the size of the attachment in its uncompressed state.

By checking the compression percentage of any compressed attachments, the method can determine whether other embedded content is being sent under the guise of a normal document. This will alert the system administrator to this fact and will allow them to investigate further, should they feel the need to do so. The compression percentage may be calculated by measuring the size of the compressed attachment, decompressing the attachment into its decompressed state, calculating the size of the decompressed attachment and thereafter calculating the compression percentage of the attachment by dividing the size of the attachment in its compressed state by the size of the attachment in its uncompressed state. The attachment may be recompressed if desired. This is seen as a simple and efficient way of calculating the compression percentage.

In another embodiment of the invention there is provided a method in which when the compression percentage is above a predetermined percentage defined in the user profile, an alert is generated. By having a compression percentage above a predetermined percentage level, the method will alert the system administrator to conspicuous documents that may contain embedded material that may constitute a threat to the company.

In one embodiment of the invention there is provided a computer program having program instructions for causing a computer to carry out the method steps. This computer program may be stored in a computer readable record medium or on a carrier signal. Alternatively, the computer program may be embedded in an integrated circuit.

In a further embodiment of the invention there is provided a system for non-intrusive analysis of email communications in an organisation's computer network, the computer network comprising a mail server computer, a plurality of remote employee computers operable by an organisation employee, and a telecommunications network connecting the mail server and the remote employee computers, characterised in that there is provided;
a network memory having user profiles relating to each employee stored thereon;
an interceptor for intercepting an email communication in the organisation's computer network;
means to copy the header information and the attachment information of an intercepted email communication before allowing the email communication proceed to its desired destination;
memory for storage of the header and attachment information;
means to retrieve the user profile relevant to the intercepted email communication from network memory;
an email analyser for analysing the header and attachment information in accordance with the user profile; and
means to generate a report based on the analysis of the intercepted email communications header and possible attachment information.

This system is seen as simple and efficient to implement as well as being effective in the analysis of email communications in a non-intrusive manner. This system may be appended to existing legacy systems with a minimum of difficulty. As the system does not have to read the content of each email it will be computationally efficient also.

In another embodiment of the invention there is a system in which there is provided means to allocate a user profile to an organisation employee. Again, such a system would be simple to implement and would also enable the system administrator to specify a user profile for each individual employee of the organisation.

In another embodiment of the invention there is provided means to update a user profile of an organisation employee. By having means to update the user profile, each employee's user profile may change as the company structure changes. New contacts may be added or old contacts deleted should they no longer be relevant. This will allow an up to date and effective system to be maintained.

In another embodiment of the invention there is provided a system in which the means to generate a report based on the analysis of the intercepted email communications header and possible attachment information further comprises means to generate an alert on certain predetermined conditions being met. By having means to generate an alert the system will be able to draw the attention of a system administrator or other personnel to various inappropriate communications that may require further investigation.

In another embodiment of the invention there is provided a system in which each user profile has a list of acceptable email communication partners for the specific user. This list of acceptable email communications partners will save valuable processing time as regular acceptable communications will not necessarily draw the attention of the system administrator to the communications.

In one embodiment of the invention there is provided a system in which the computer network comprises a plurality of mail servers distributed over the organisation's computer network, each mail server having a plurality of remote employee computers connected thereto by way of a telecommunications network, the system further comprises means to nominate one of the mail servers as a master server and the remaining mail server computers as slave servers, each of the slave mail server computers having transmitters to transmit reports to the master mail server and the master mail server computer having a receiver for receiving the reports and a processor for processing the received reports. By having such a system the email communication of an entire organisation may be monitored from one central location. The person responsible for monitoring the email communication will no longer have several separate reports that may be in different formats but will have one central report where they can analyse the email communications for the organisation as a whole.

In another embodiment of the invention there is provided a system in which one or more of the mail server computers are in remote jurisdictional locations. It is envisaged that the mail server computer will be remote from the remote employee computers. This mail server computer may be not only remote in physically separate locations, but may also be in another jurisdiction entirely.

In a further embodiment of the invention there is provided a system in which there is provided means to calculate the compression percentage of an email communication attachment. This will enable the system administrator to detect threats and inappropriate communications disguised as normal email communications.

### Detailed Description

The invention will now be more clearly understood from the following description of some embodiments thereof given by way of example only with reference to the accompanying drawings in which:
Fig. 1 is block diagram of an organisation computer network in which the invention is carried out; and
Fig. 2 is a flow diagram of the method in accordance with the invention.

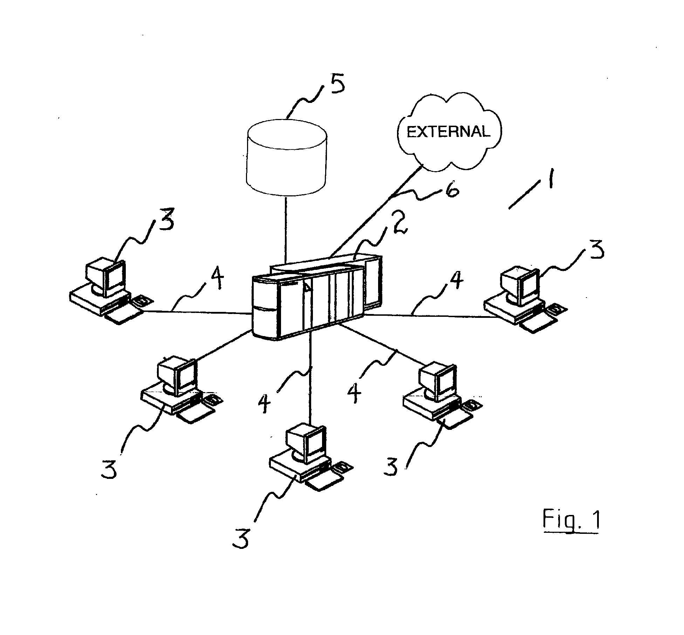

Referring now to Fig. 1 of the drawings there is shown an organisations computer network, indicated generally by the reference numeral 1, comprising a mail server 2 and a plurality of remote employee computers 3, each of the remote employee computers 3 being operable by at least one organisation employee (not shown). The mail server 2 is connected to each of the remote employee computers by way of a telecommunications network, parts of which are indicated by the reference numeral 4, and there is further provided network memory 5 having user profiles relating to each organisation employee stored thereon. An external communication link 6 is further connected to the mail server 2 for relaying e-mail communications to and from the organisation computer network 1 and external communication devices (not shown) not within the organisation computer network i.e. not within the organisation computer network 1 and thus not under the organisation's control.

In use, organisation employees send and receive e-mail communications on a remote employee computer 3. Each of these e-mail communications passes through the mail server computer 2 en route to its intended recipient whether internal or external. All e-mail communications passing through the mail server computer 2 are intercepted and the header information and attachment information if available of each e-mail communication is copied while allowing the e-mail to proceed to its intended recipient. The header and attachment information, if applicable, are then stored in the network memory and the user details of the sender of the e-mail communication and/or the recipient of the e-mail communication are retrieved from network memory. The header and any available attachment data are analysed in accordance with the retrieved user profile and a report based on the analysis is subsequently generated and stored in network memory 5 for later review by a system administrator (not shown). The attachment information may include the entire email communication attachment including the content of the attachment for analysis as well as other standard data relating to the attachment.

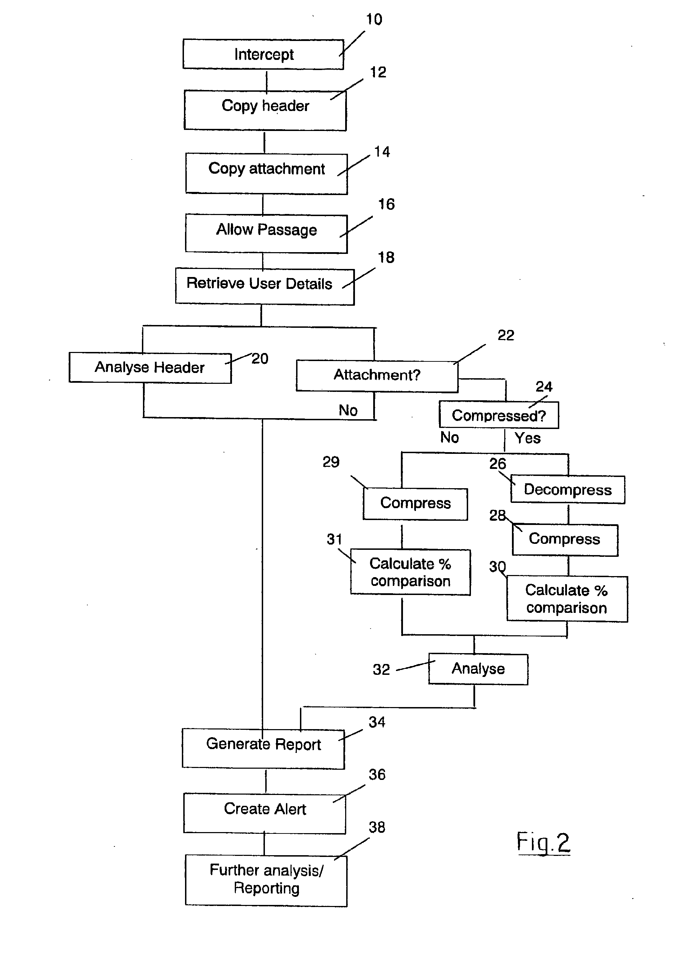

Referring now to Fig. 2 of the drawings there is shown a flow diagram of the method in accordance with the present invention. In step 10, an e-mail communication is intercepted en-route to its intended recipient. In step 12 the header information is copied. This may include any of the sender address, the recipient address, the time at which the message was sent and the subject of the e-mail communication. In step 14 a copy of the attachment information, if available, is taken from the e-mail communication before the e-mail communication is allowed through passage on to its intended recipient in step 16.

In step 18 the header information is checked and the user details of the intended recipient and/or the e-mail communications sender are retrieved. The user details contain information relating to the employee within the organisation and include the type of e-mail communication clearance that the individual has. For example, the employee may be a marketing manager and may have unlimited e-mail access to the remaining staff in the marketing division. They may not however, be expected to e-mail the engineering research department. They may also be expected to contact advertising companies. Therefore, the marketing manager would have approved access to the marketing division and external advertising companies. A profile of acceptable communication partners can be drawn up for each employee. Furthermore, managers may be expected to use e-mail much more often than junior members of staff and as such would generate a much larger volume of e-mail traffic. Each employee can therefore be given an e-mail communication volume quota based on factors such as their position within the company, the department in which they work, predetermined acceptable email communication traffic volume levels acceptable content types and acceptable communication addresses.

In step 20, the header information is analysed. The sender and recipient details are noted. A check is made to see if the two parties are acceptable communication partners as described above and further checks are carried out on the acceptable content data and the traffic volume levels of the employees involved. The number and types of check carried out is almost infinite and specific checks may be carried out at particular times of year or during significant events. For example, extra vigilance may be taken around the time of the staging of the Grand National for communications with bookmakers or with stockbroker firms prior to the release of annual results. Once the header information has been analysed it proceeds to step 34 for report generation.

At the same time as the header is being analysed, a check is made in step 22 to see if there is an attachment accompanying the header information. If there is no attachment, the method proceeds to step 34 for report generation. If, however, at step 22 there is an attachment, the method proceeds to step 24 and a check is made to see if the attachment is compressed. If at step 24 the attachment is found to be compressed, the method proceeds to step 26 where the attachment is decompressed. A further check is made to ensure that all parts of the attachment are decompressed and the decompression step continues until all parts of the attachment are decompressed. The size of the decompressed attachment is then measured. In step 28 the attachment is recompressed again and the size of the recompressed attachment is measured. Alternatively, the size of the attachment in its compressed state could be measured prior to decompression in step 26. In step 30, the compression percentage is calculated by dividing the measured value of the compressed attachment by the measured value of the decompressed attachment.

The compression percentage for various different types of attachment is known and therefore if content, such as a jpeg image which is already highly compressed, is embedded in a Word (registered Trade Mark) document, it will effect the compression percentage of that type of document. Typically, a Word (registered Trade Mark) document could be compressed to twenty per cent or one fifth of its actual size. If a jpeg image was embedded in the Word (registered Trade Mark) document, the compression percentage may only be fifty per cent or half the Word (registered Trade Mark) document's initial size. If the compression percentage is over a predetermined percentage for that type of document, there is a high probability that other material has been embedded in the attachment and the system administrator can investigate the matter further. If at step 24 it is found that the attachment is not compressed the method proceeds to step 29 where the attachment is compressed and the size of the compressed attachment is measured. In step 31 the percentage compression is calculated by dividing the size of the newly compressed attachment with its size in an uncompressed state. Both the compressed and non-compressed attachments then proceed to step 32 where analysis of the attachment is carried out. This analysis will include the characteristics of the attachment as well as the type of attachment being sent or received and whether this is suitable type of attachment to be sent or received by that particular employee. For non-compressed attachments, a check of the bandwidth that is wasted by not compressing the attachment may be carried out. Again, numerous different types of analysis can be carried out. Once the analysis in step 32 has been completed, the method proceeds to step 34 where the report is generated according to the analysed header and attachment information.

In step 34 a report is generated which may include various information regarding the email communication, such as it came from a legitimate source and therefore would not be a cause for further concern or that the email communication came from an inappropriate source with an attachment that contained possibly inappropriate material. This type of material may constitute a threat to the company and as such should be reported to the appropriate company personnel. In step 34 the data is sent to a master report where all emails for that employee are contained and may be compared or grouped with the emails of other employees to provide a wider analysis of the email communications throughout the organisation. In step 36 an alert may be created if a particular email communication is not within acceptable predetermined boundaries. This may constitute flagging a particular email communication for the attention of a system administrator. Finally, in step 38 any further analysis or reporting such as group reporting may be carried out.

In the method described reports of a particular organisation's email communication network have been described. Of course, it will be understood that the organisation's email network may comprise a number of mail servers located in different locations and possibly in other jurisdictions. A report analysing all email communications of a company may be carried out by grouping all the reports of emails passing through each of the mail servers into a single location, analysing the emails and generating a report on-all email communications within an organisation. This of course is possible due to the computational efficiency by looking at header information and not being concerned with the actual content of the emails.

It is envisaged that analysis of not only the internal and external mails of the company's employees could be carried out but the analysis could extend to customers continuously mailing the organisation. If a large number of emails are coming from a particular source, it may be desirable to have an analysis of the communications. Such an analysis could change the way in which a customer is handled.

In some cases it may be preferable not to have to carry out extensive checks and analysis on a particular user's email communications. In this instance a default user profile can be assigned to that user as their user profile that will enable unrestricted access to the user. In this way analysis of the email communications can still be carried out but it need not be as rigorous as usual.

It will be further understood that while in the above description reports have been described as being generated immediately as analysis takes place, it will be appreciated that there may be a time lag between the analysis and report generation. Some reports may be generated on a weekly, monthly or annual basis. Further, certain circumstances may require immediate reporting, for example, contacts to stockbrokers during sensitive reporting times or contacts to adult or other inappropriate sites.

A report could be an entry into a database or a file and could form part of a larger report. A report need not be a separate entity that would require the immediate attention of a system administrator. An alert may be a flag on a particular report or an identifier in a database highlighting a particular communication. Alternatively an alert may be an immediate email communication to an employee or a system administrator. An alert will draw the attention of an individual to a particular communication or communication pattern that is not compliant with a user's profile.

It must be appreciated that various aspects of the invention may be embodied on a computer that is running a program or program segments originating from a computer readable or usable medium, such medium including but not limited to magnetic storage medium (ROMs, floppy disks, hard disks, etc.), optically readable media (e.g. CD ROMs, DVDs, etc.) and carrier waves (e.g. transmissions over the internet). A functional program, code and code segments, used to implement the present invention can be derived by a skilled computer programmer by the description of the invention contained herein. It will be appreciated therefore that a computerised program may be providing program instructions which, when loaded into a computer will constitute the means in accordance with the invention and that this computer program may be embodied on a record medium, a computer memory, a read only memory or carried on an electrical or optical carrier signal or other similar means.

In this specification the terms "comprise, comprises, comprised and comprising" as well as the terms "include, includes, included and including" are deemed to be totally interchangeable and should be afforded the widest interpretation possible.

This invention is not limited to the embodiments shown but may be varied in both construction and detail within the scope of the claims.

## Claims

1. A method of non-intrusive analysis of email communications in an organisation's computer network (1), the organisation's computer network comprising a mail server computer (2), a plurality of remote employee computers (3) operable by an organisation employee, and network memory (5) having user profiles relating to each organisation employee stored thereon, a telecommunications network (4) connecting the mail server (2) and the remote employee computers (3), the method comprising the steps of:
(a) intercepting email communications in the organisation's computer network;
(b) copying header information and any attachment information of each intercepted email communication;
(c) allowing the email communication to proceed to its desired destination;
(d) storing the header information and the attachment information where available in network memory;
(e) retrieving at least one user profile relevant to the intercepted email communication from network memory (5);
(f) analysing the intercepted email communications header and any available attachment information in accordance with the user profile; and
(g) generating a report based on the analysis of the intercepted email communications header and available attachment information.

2. A method of non-intrusive analysis of email communications in an organisation's computer network (1) as claimed in claim 1 in which the step of copying header information further comprises copying one or more of a sender address, receiver address, time sent details and subject details where available from the header information.

3. A method of non-intrusive analysis of email communications in an organisation's computer network (1) as claimed in claim 1 or 2 in which the initial step is performed of considering the position of an employee within the organisation as well as the department in which the employee is working before allocating a user profile to each organisation employee, the user profile detailing acceptable email communications including one or more of:
(a) predetermined acceptable incoming traffic volume levels;
(b) predetermined acceptable outgoing traffic volume levels;
(c) predetermined acceptable incoming content types;
(d) predetermined acceptable outgoing content types;
(e) predetermined acceptable incoming communication addresses; and
(f) predetermined acceptable outgoing communication addresses.

4. A method as claimed in any preceding claim in which a number of organisation employees are grouped together into a user group and analysis and reporting of the user group email communications are carried out.

5. A method as claimed in any preceding claim in which there are provided a plurality of distributed mail server computers (2) in an organisation's computer network (1), each mail server computer (2) having a plurality of remote employee computers (3) connected thereto by way of a telecommunications network (4), the method further comprising the step of designating one of the mail servers as the master mail server and the remainder of the mail servers as slave mail servers, each of the slave mail servers sending generated reports to the master mail server and thereafter the master mail server generating an organisation computer network email communication report.

6. A method as claimed in any preceding claim in which the step of generating a report based on the analysis of the email communication further comprises:
(a) defining alarm conditions based on variants of traffic having regard to the user profile; and
(b) on generating a report, generating an alert to a system administrator that predetermined alarm conditions have been met.

7. A method as claimed in claim 6 in which an alert is generated on the volume of email traffic being above a predetermined level.

8. A method as claimed in claim 6 in which an alert is generated on the volume of email traffic being below a predetermined level.

9. A method as claimed in any of claims 6 to 8 in which an alert is generated on the email communication being addressed with an unauthorised address.

10. A method as claimed in any preceding claim in which each attachment is checked for compression and on the attachment not being compressed the steps are performed of:
(a) measuring the size of the uncompressed attachment;
(b) on the attachment size exceeding a predetermined level, compressing the attachment and measuring the size of the compressed attachment; and
(c) generating a report for the system administrator.

11. A method as claimed in any of claims 1 to 9 in which each attachment is checked for compression and on the attachment being a compressed attachment the steps are performed of:
(a) measuring the size of the compressed attachment;
(b) decompressing the attachment and measuring the size of the decompressed attachment; and
(c) calculating the percentage compression of the attachment by dividing the size of the attachment in its compressed state by the size of the attachment in its uncompressed state.

12. A method as claimed in claim 11 in which when the compression percentage is above a predetermined percentage defined in the user profile, an alert is generated.

13. A computer program having program instructions for causing a computer to carry out the method steps of any of claims 1 to 12.

14. A computer program as claimed in claim 13 in which the program is stored in a computer readable record medium.

15. A computer program as claimed in claim 13 in which the program is stored on a carrier signal.

16. A computer program as claimed in claim 31 in which the program is embedded in an integrated circuit.

17. A system for non-intrusive analysis of email communications in an organisation's computer network (1), the computer network comprising a mail server computer (2), a plurality of remote employee computers (3) operable by an organisation employee, and a telecommunications network (4) connecting the mail server and the remote employee computers, **characterised in that** there is provided:
a network memory (5) having user profiles relating to each employee stored thereon;
an interceptor for intercepting an email communication in the organisation's computer network;
means to copy the header information and the attachment information of an intercepted email communication before allowing the email communication proceed to its desired destination;
memory for storage of the header and attachment information;
means to retrieve the user profile relevant to the intercepted email communication from network memory;
an email analyser for analysing the header and attachment information in accordance with the user profile; and
means to generate a report based on the analysis of the intercepted email communications header and possible attachment information.

18. A system as claimed in claim 17 in which there is provided means to allocate a user profile to an organisation employee.

19. A system as claimed in claim 17 or 18 in which there is provided means to update a user profile of an organisation employee.

20. A system as claimed in any of claims 17 to 19 in which the means to generate a report based on the analysis of the intercepted email communications header and possible attachment information further comprises means to generate an alert on certain predetermined conditions being met.

21. A system as claimed in claims 17 to 20 in which each user profile has a list of acceptable email communication partners for the specific user.

22. A system as claimed in any of claims 17 to 21 in which the computer network comprises a plurality of mail servers distributed over the organisation's computer network, each mail server (2) having a plurality of remote employee computers (3) connected thereto by way of a telecommunications network (4), the system further comprises means to nominate one of the mail servers as a master server and the remaining mail server computers as slave servers, each of the slave mail server computers having transmitters to transmit reports to the master mail server and the master mail server computer having a receiver for receiving the reports and a processor for processing the received reports.

23. A system as claimed in any of claims 17 to 22 in which one or more the mail server computers are in remote jurisdictional locations.

24. A system as claimed in any of claims 17 to 23 in which there is provided means to calculate the compression percentage of an email communication attachment.
